# EUROPEAN PATENT SPECIFICATION

(11) **EP 2 446 279 B1**
(45) Date of publication and mention of the grant of the patent: **22.04.2015**
(21) Application number: 09787981.1
(22) Date of filing: 26.06.2009
(51) Int. Cl.: G01P 3/489, G01P 21/02, G01D 5/244, B66B 25/00, G01P 13/04

(54) **ROTARY SPEED DETECTION DEVICE WITH ERROR MONITORING**
VORRICHTUNG ZUR BESTIMMUNG DER DREHGESCHWINDIGKEIT MIT FEHLERÜBERWACHUNG
DISPOSITIF POUR DÉTERMINER UNE VITESSE DE ROTATION AVEC SURVEILLANCE D'ERREURS

(43) Date of publication of application: 02.05.2012
(73) Proprietor: Mitsubishi Electric Corporation, Tokyo 100-8310 (JP)
(72) Inventor: FORRAI, Alexandru, 3544 NT Utrecht (NL)
(74) Representative: Hoffmann Eitle
(86) International application number: PCT/JP2009/062165
(87) International publication number: WO 2010/150416

(56) References cited:
- EP-A1- 1 684 051
- WO-A2-01/92894
- DE-A1- 10 037 245
- GB-A- 1 219 757
- US-A- 4 028 686
- US-A- 6 127 948

## Description

### Technical Field

The present invention is generally directed to speed and movement direction sensing in motion control systems (elevators, escalators, motor drives, etc) and more particularly, the present invention is directed to an improved, fault-tolerant, high reliability speed and movement direction sensing device having a self-test, error-monitoring and diagnosis features by using electronic components.

### Background Art

The present invention is an improvement over the priori art and compared with high reliability speed and movement direction sensing is a cost effective solution.

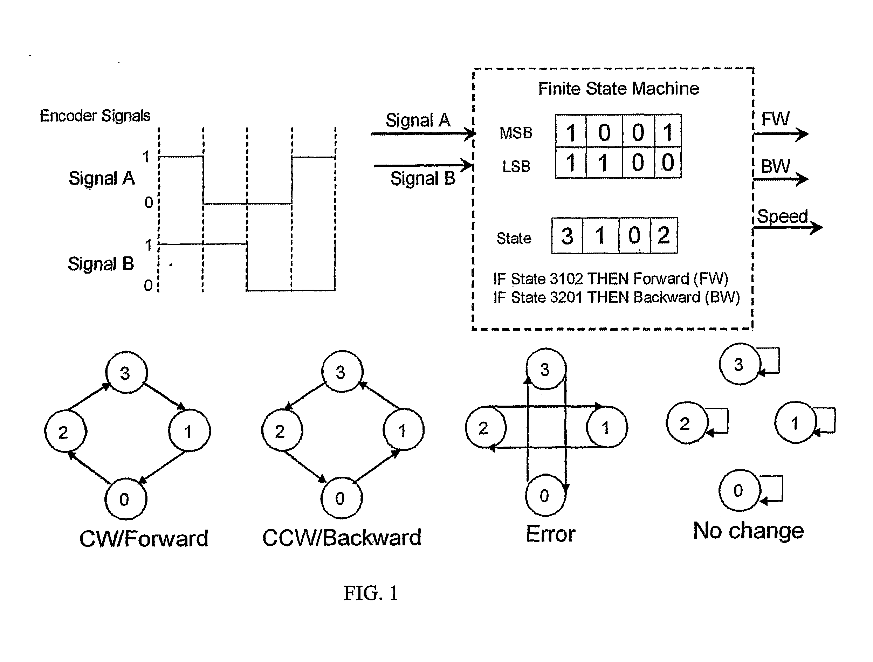

Speed and movement direction sensing in case of motion control systems (elevators, escalators, motor drives) is usually performed using an incremental encoder (optical, magnetic, inductive, etc.), which generates two shifted pulses (with 90 electrical degrees), shown in FIG. 1. Measuring the frequency of the pulses, is possible to find out the rotation speed as well as traveling speed of elevator car or escalator. The direction of the movement can be detected using different approaches. One approach is: at the event generated by the falling edge of signal A (for example) check the state of the signal B. If signal B is 1 logic then the movement direction is clockwise (CW, i.e. forward). Another approach is to assign to each encoder state a decimal state (3, 1, 0 and 2) shown in FIG. 1. If the state transitions are: 3 to 1 to 0 to 2 as shown in FIG. 1. the movement direction is clockwise (i.e. forward or up). If the state transitions are opposite (see FIG. 1) the movement direction is counterclockwise (CCW, i.e. backward or down), such as disclose by U.S. Patent, No. 6,127,948: Bidirectional synthesis of pseudorandom sequences for arbitrary encoding resolutions.

The invalid transitions between different encoder states are also shown in FIG. 1, and can be used for error detection. However, the main disadvantage of the encoder with two pulses is that if one of the sensors fails, movement direction detection is no longer possible (two shifted signals are required for movement direction detection and one signal for speed measurement). Another disadvantage is: since there is no invalid state on current state, error detection based on current state is not possible. There are only invalid state transitions, which can be used for error detection.

Reliability of the speed and movement direction sensing is a key issue in motion control systems in general, in the elevator and escalator industry in particular. Furthermore, the current regulations related to elevators in several countries allow the use of electronic overspeed governor, however the imposed safety and integrity level requires systems with self-test and monitoring such as disclosed by: World Patent, No. WO2007123522: Rotary encoder with built-in-self-test and European Patent, No. EP1186432: Pinter having fault tolerant encoder wheel. Another approach is to use systems with two channels or more with comparison.

The reliability of the speed and movement direction sensing using the encoder having two shifted pulses (shown in FIG. 1) can be enhanced considering a dual-channel system with com arison additional to i is which detects s stem failure. A dual-channel system having applications for elevators is disclosed by U.S. Patent, No. 6,170,614: Electronic overspeed governor for elevators. However, such a system will require the mounting on the same shaft of two identical encoders, which will increase significantly the costs of the system. Furthermore, precise alignment of the encoders must be ensured.

Therefore, the sensing device proposed in this invention is going to overcome these disadvantages.

EP 1 684 051 A1 relates to a controller for an electric power steering apparatus having an encoder to identify valid and invalid sensor states. Further, US 4 028 686 A relates to a digital detector having at least three digital sensors outputting a plurality of repeating sequential states so long as a dynamic phenomenon exists. Detection of the repetition rate of an instantaneous output state of the sensor provide a measure of speed. Furthermore, DE 100 37 245 A1 relates to the detection of rotation, and in particular to a direction detection based on an order of states output from a plurality of sensors. Moreover, GB 1 219 757 A relates to an arrangement for determining the position of a displaceable member of a rotational element, wherein the rotational or linear displacement is associated with an incremental position transducer or a group of transducers, which produce three periodically varying electrical signals A, B and C each displaced in phase by 21° to determine the direction of displacement. In addition, WO 01/92894 A2 relates to an integrated speed sensor for elevator application including a bearing encoder with two or three hall effect sensors on the encoder. One sensor therein is used to provide a high resolution quadrature signal for speed control, with the other sensors providing a low resolution signal that is used for rescue encoder quadrature signal and a speed check encoder signal.

### Summary of Invention

In accordance with a preferred first embodiment of the present invention, a speed and movement direction sensing device comprises an encoder, which generates signals for a speed signal generations section, a direction detections section, and encoder self-test section and which are interface with and elevator or escalator control unit.

The encoder has three sensors placed equidistantly at 120 electrical degrees, a disc with optic, magnetic or inductive asymmetry, which is connected mechanically to the elevator motor shaft, governor shaft or governor sheave or escalator motor shaft.

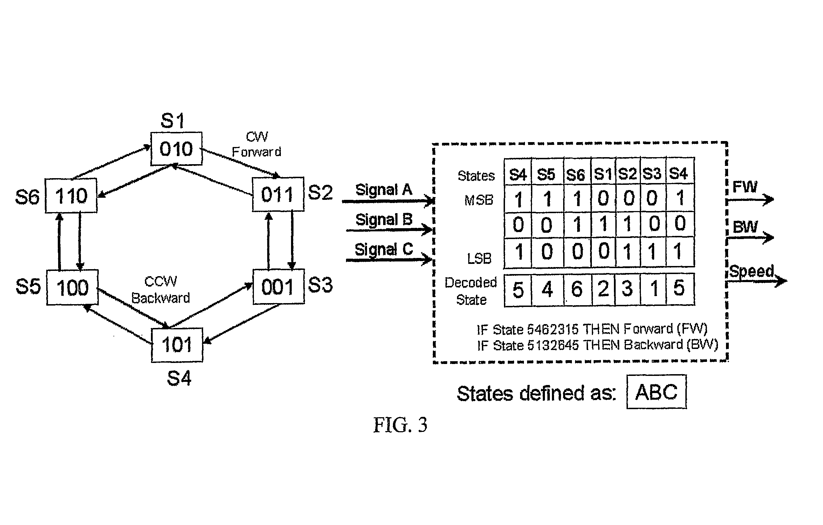

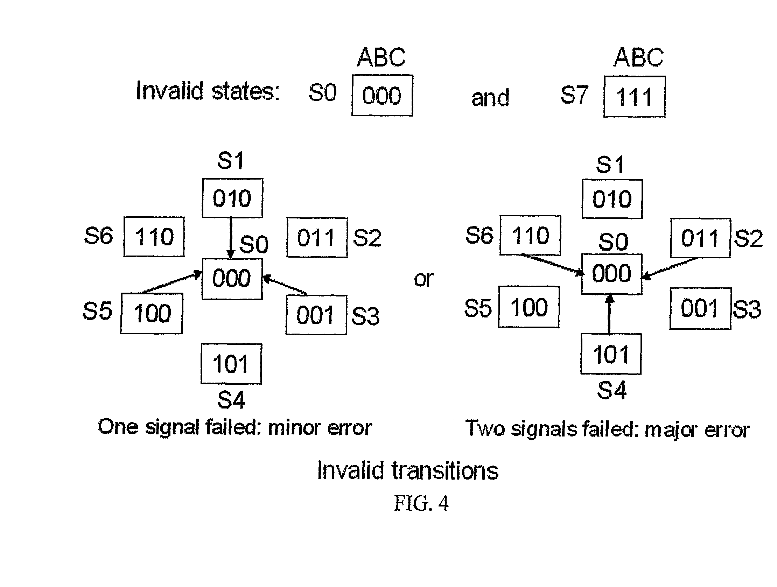

However, the shift between the pulses can be different from 120 (electrical) degrees as long as the states and states transitions associated to such an encoder are identical to the states and state transitions associated to an encoder with three pulses shifted with 120 (electrical) degrees. The states and states transitions for the encoder which has three sensors placed equidistantly at 120 electrical degrees are shown in FIG. 3 and FIG. 4. The speed signal generation section receives the encoder signals and generates a pulse signal, which frequency is equal with the frequency of the input signal. The direction detection section generates a direction signal based on the encoder pulses and the encoder self-test section monitors the encoder states and detects encoder error based on the encoder signals.

The elevator or escalator control unit receives the speed, direction and encoder self-test signals, is interfaced to the external world via an input/output port and can activate the safety system in case of encoder/sensor failure.

The encoder of the present invention generates three shifted signals, which leads to six valid encoder states and two invalid encoder states. If the encoder self-test section, detects an invalid state, then reports encoder error to the elevator or escalator control unit. Based on elevator/escalator current state and received signals via the input/output port, the control unit decides if the elevator/escalator goes out of service, elevator moves safely to the next floor or the safety gear is activated.

The main advantage is that encoder self-test can be performed at zero speed too, before the elevator or escalator movement, since the self-test is based on the encoder current state and does not require the knowledge of the previous state.

Moreover, the encoder provides three shifted signals - since only two shifted signals are necessary for direction detection - a fault-tolerant speed and movement direction sensing is possible.

In accordance with an embodiment of the present invention, a fault-tolerant speed and movement direction sensing device comprises:
- an encoder having three sensors placed equidistantly at 120 electrical degrees, a disc with optic, magnetic or inductive asymmetry, which is connected mechanically to the shaft of moving part (i.e. elevator or escalator motor shaft, governor shaft or governor sheave, motor drive shaft, etc.);
- an encoder self-test section (exactly as in the first embodiment of the present invention) which monitors the encoder states and detects encoder error based on the encoder signals;
- a speed signal generation section which receives the encoder signals and generates a pulse signal having a frequency proportional with the input signal;
- a direction detection section which combines the encoder input signals and generates three direction signals;
- an error monitoring and diagnosis section, which detects the encoder signal failure
   and generates signals for direction signal selection (selection of the proper direction signal) and signals for selection of the proper frequency division factor, used in the frequency divider section;
- a direction signal selection section, which selects the proper direction signal, received from direction detection section, based on the information provided by the error monitoring and diagnosis section;
- a frequency divider section, which outputs the speed signal after dividing the frequency of the signal from the speed signal generation section with a frequency division factor specified by the error monitoring and diagnosis section.

If only one encoder signal failed the sensing device reports minor error and provides valid direction and speed signals (fault-tolerant for one encoder signal failure). If two or more signals failed, major error is reported in this case direction information is no longer valid and the speed information is valid only if two signals failed.

The main advantage of the fault-tolerant sensing device is that offers valid speed and direction information in case of minor error (one encoder signal failed) and allows the motion control system to continue or finish its task before the system goes out of service (i.e. the elevator system safely moves to the next floor, before going out of service due to encoder failure).

The above discussed and other features and advantages of the present invention will be appreciated and understood by those skilled in the art from the following detailed description and drawings.

### Brief Description of the Drawings

FIG. 1 is an illustrative diagram related to an encoder having two shifted pulses, showing encoder states and states transitions;
FIG. 2 is a block diagram of the speed and direction sensing device with self-test applied in elevators and escalators, illustrating the system components and interconnections;
FIG. 3 is a diagram illustrating the valid states and state transitions of an encoder having three sensors shifted with 120 (electrical) degrees;
FIG. 4 is a diagram illustrating the invalid state transitions of an encoder having three sensors shifted with 120 (electrical) degrees, in case of minor and major encoder error;
FIG. 5 is a logical function description of the encoder self-test section and is an illustrative example of its implementation using logical gates;
FIG. 6 is a block diagram of the fault-tolerant speed and direction sensing device with self-test, error monitoring and diagnosis, illustrating the system components and interconnections;
FIG. 7 is a diagram illustrating the speed signal generation section, the frequency divider section and the direction detection section, related to the fault-tolerant speed and movement direction sensing device;
FIG. 8 is a diagram illustrating state transition trajectories, and a state machine description of the encoder error monitoring and diagnosis section used for direction signal selection; and
FIG. 9 is a diagram illustrating a state machine description of the encoder error monitoring and diagnosis section used for frequency division factor selection.

### Description of embodiments

An illustrative example of the main states and state transitions of an encoder with two sensors (prior art), generating two pulses shifted with 90 has been described in the background of the invention and is shown in FIG. 1.

In FIG. 1 to each encoder state is assigned i.e. a decimal state (3, 1, 0 and 2). If the state transitions are: 3 to 1 to 0 to 2 as shown in FIG. 1, then the movement direction is clockwise (CW), i.e. forward or up. If the state transitions are opposite (see FIG. 1) the movement direction is counterclockwise (CCW), i.e. backward or down.

Invalid transitions between different states are also shown in FIG. 1 and can be used for error detection (prior art). However, the main disadvantage is that since there is no invalid state on current state, error detection based on current state is not possible (is possible only based on invalid state transitions).

To facilitate error detection based on current encoder state, speed and direction sensing device with self-test is described in greater detail below.

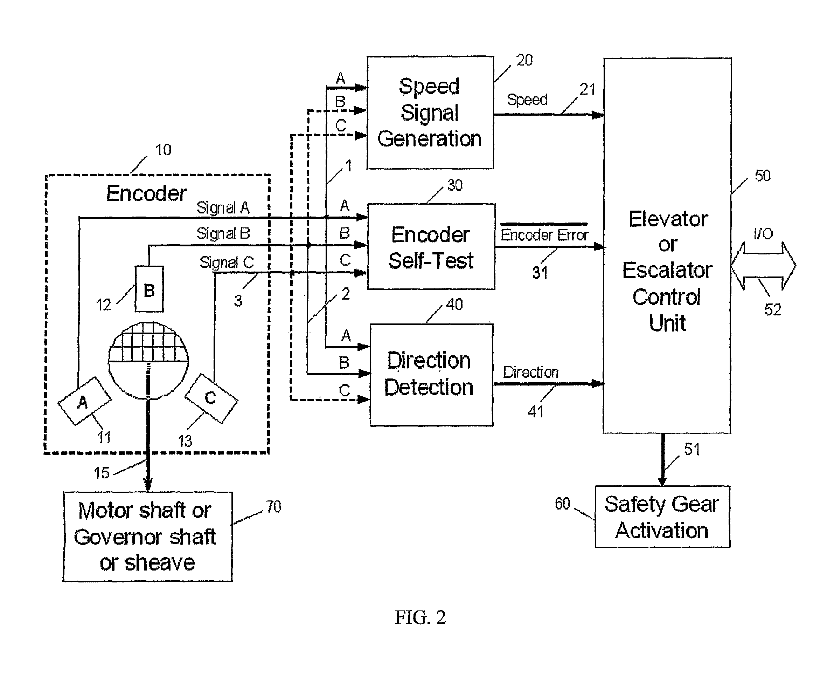

Referring now to FIG. 2, a block diagram of the speed and direction sensing device with self-test, illustrating the system components and interconnections is shown. An encoder 10, having three sensors 11, 12 and 13 placed equidistantly at 120 electrical degrees and a disc 14, (with optic, magnetic or inductive asymmetry) is connected mechanically via connection link 15, to the elevator or escalator motor shaft, governor shaft or governor sheave 70. The encoder 10 generates three pulses 1, 2 and 3 shifted for example to 120 electrical degrees, which are received by the speed signal generation section 20, encoder self-test section 30 and direction detection section 40.

The speed signal generation section 20 generates the speed signal 21 (the output signal 21) based on the pulse signals 1, 2 and 3. The speed signal 21 is generated by combining the input signals using or exclusive logic (XOR), i.e. if all three input signals 1, 2 and 3 are combined using XOR logic then the frequency of the speed signal 21, will three times the frequency of the input signal. If only two signals are combined using XOR logic the frequency of the speed signal 21 (the output signal 21), will two times the frequency of the input signal.

The encoder self-test section 30 receives the input signals (1, 2 and 3) and monitors the encoder states and detects encoder error. The encoder error signal 31 (the output signal 31), is generated i.e. according to negative logic: is 0 logic if is an encoder error and 1 logic if is no encoder error.

Direction detection section 40 selects, based on the three shifted pulse signals, two of the pulse signals, and generates a movement direction signal of the rotary body based on the state transitions of the selected pulse signals. Therefore, the direction detection section 40, combines two encoder input signals (i.e. signal 1 and signal 2) and generates the direction signal 41.

The elevator or escalator control unit 50 receives the speed signal 21, the encoder error signal 31 and the direction signal 41. Based on elevator/escalator current state and received signals via the input/output port 52, the control unit 50 decides if the elevator/escalator goes out of service, elevator moves safely to the next floor or activates via signal 51 the safety gear 60.

The input/output port 52 facilitates software up-dates, initialization, operational status, alarm conditions and monitoring features between the control unit 50 and external devices.

In order to describe the encoder self-test section, first the valid and invalid state and state transitions of the encoder 10, are described at great detail below and are shown in FIG. 3 and FIG.4.

Referring to FIG. 3, the diagram illustrates the valid states and state transitions of encoder 10. The six valid states of encoder 10, are coded as S1, S2, S3, S4, S5 and S6. If the state transitions are: S1 to S2 or S2 to S3 and so on, the movement direction is clockwise (i.e. forward or up). If the state transitions are opposite (see FIG. 3) the movement direction is counterclockwise (i.e. backward or down).

Referring to FIG. 4, it illustrates the invalid states and the invalid state transitions of encoder 10. The two invalid states are coded S0 (000) and S7 (111) and invalid state transitions are shown toward to invalid state S0 (similar transitions can be described toward state S7).

Transitions from state S 1 to S0, from state S3 to S0, from state S5 to S0 are associated with one signal failure. Transitions from state S2 to S0, from state S4 to S0, from state S6 to S0 are associated with two simultaneous signals failures.

In the illustrative example, we assume that the encoder sensors have pnp output, normally open (the pnp transistor switches the output high). In case of sensor failure, transistor failure or power failure the output will be switched to low and will stay low. Similar transitions can be defined for sensors having pnp output normally closed, npn output, normally open or close.

Having defined the encoder valid and invalid states the encoder self-test section 30, is described in detail below.

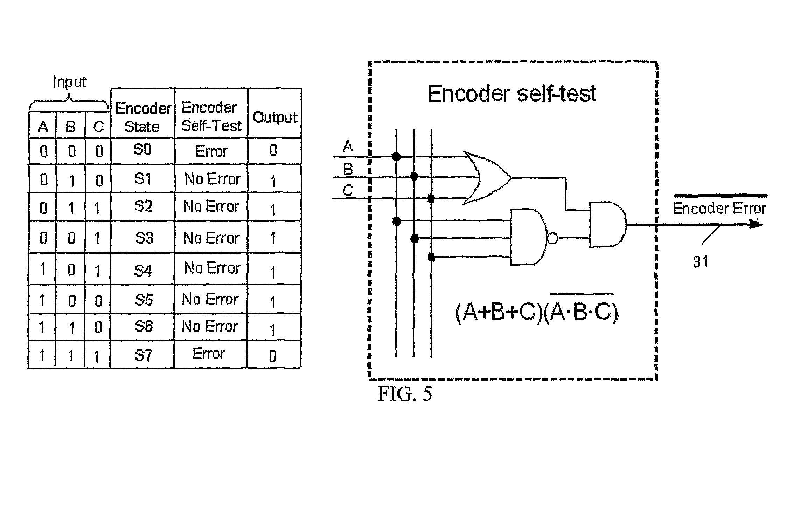

Referring to FIG. 5, is a logical function description of the encoder self-test section 30. Invalid encoder states are reported as encoder error. The encoder error signal 31 (i.e. considering negative logic) is: 1 logic in case of valid encoder states (no encoder error) and 0 logic in case of invalid encoder states (encoder error). The logic function described above can be implemented using logical gates and circuits, an illustrative example is shown in FIG. 5. Moreover, the output signal can be stored in a D-latch if it is required.

Therefore, the first invention describes a speed and movement direction sensing device with self-test connected to an elevator or escalator control unit. Encoder 10 generates 3 signals shifted with 120 electrical degrees, since only two signals are necessary for movement direction sensing and only one signal is necessary for speed sensing, the realization of a fault-tolerant speed and movement direction sensing device is possible.

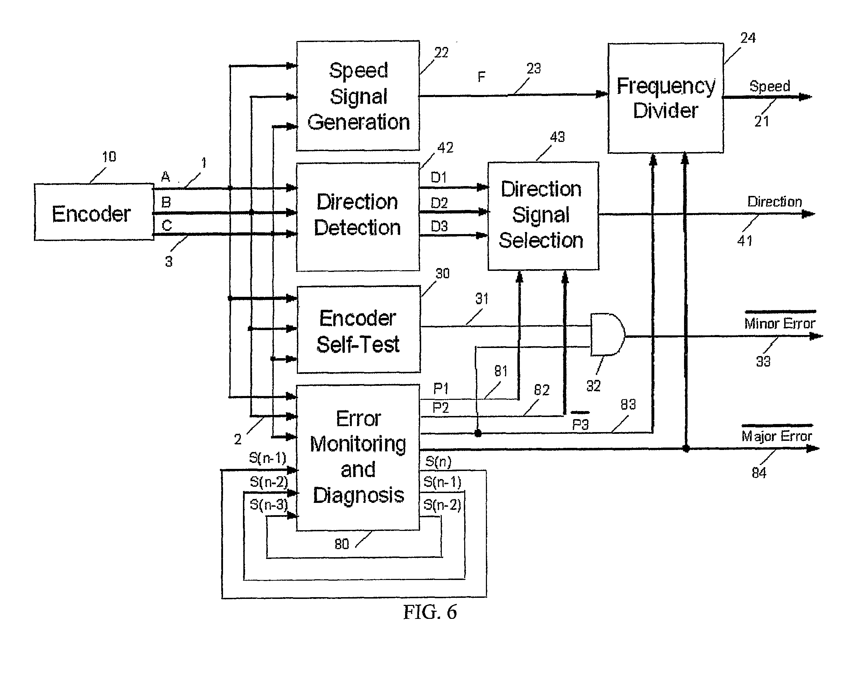

Referring to FIG. 6, is a block diagram an embodiment of the present invention, a fault-tolerant speed and direction sensing device with self-test, error monitoring and diagnosis, illustrating the system components and interconnections.

The components and the interconnections this embodiment of the present invention is described in details below.

The encoder generates pulse signals (1, 2 and 3) shifted to 120 electrical degrees, which are received by the speed signal generation section 22, encoder self-test section 30 (as in the first embodiment of the invention), direction detection section 42 and error monitoring and diagnosis section 80.

The speed signal generation section 22 generates the output signal 23 (signal F) by combing the input signals (1, 2 and 3) by XOR logic.

The encoder self-test section 30 generates the output signal 31 as described with reference to figure 2.

The direction detection section 42, combines encoder input signals in pairs (i.e. 1 and 2, 2 and 3, 3 and 1) and generates three direction signals denoted by D1, D2, D3.

The error monitoring and diagnosis section 80 receives inputs from the encoder section 10, and based on current encoder state denoted by S(n) and previous encoder states denoted by S(n-1), S(n-2) and S(n-3), generates output signals (81, 82, 83 and 84) denoted by P1, P2, P3 and Major Error. Signal 81 (P1) and signal 82 (P2) selects via the direction signal section 43, the proper direction signal 41. Signal 83 (P3) monitors invalid state transitions in case of one signal failure and the signal 84 (denoted Major Error) monitors major encoder error (two or more encoder signals failures).

The direction signal selection section 43 generates the direction output signal 41 by selecting (multiplexing) one of the input signals (D1, D2 or D3), function on signal 81 (P1) and signal 82 (P2) generated by the error monitoring and diagnosis section 80

The frequency divider section 24 receives the input signal 23, from speed signal generation section 22 and divides the frequency of the input signal with a constant factor, depending on the encoder error state. The constant division factor is defined by the signals 83 (P3) and (84) Major Error. If there is no encoder error (no signal failure) then divides the frequency of the input signal with the factor of 3 (three). If minor encoder error occurred (one signal failed) then the frequency of the input signal is divided by a factor of 2 (two). If a major encoder error occurred (two or more signals failed) then the frequency of the input signal is left unchanged.

Signal 33 (Minor Error) according to the second embodiment of the current invention is generated by section 32 as a logical AND combination between signal 31 and signal 83 (P3), combing static error monitoring (section 30) and dynamic error monitoring (section 80). The static error monitoring is related to the encoder current state and the dynamic error monitoring is related to encoder state transition.

Speed signal generation section 22, direction detection section 42 and the frequency divider section 24 are described in more detail below.

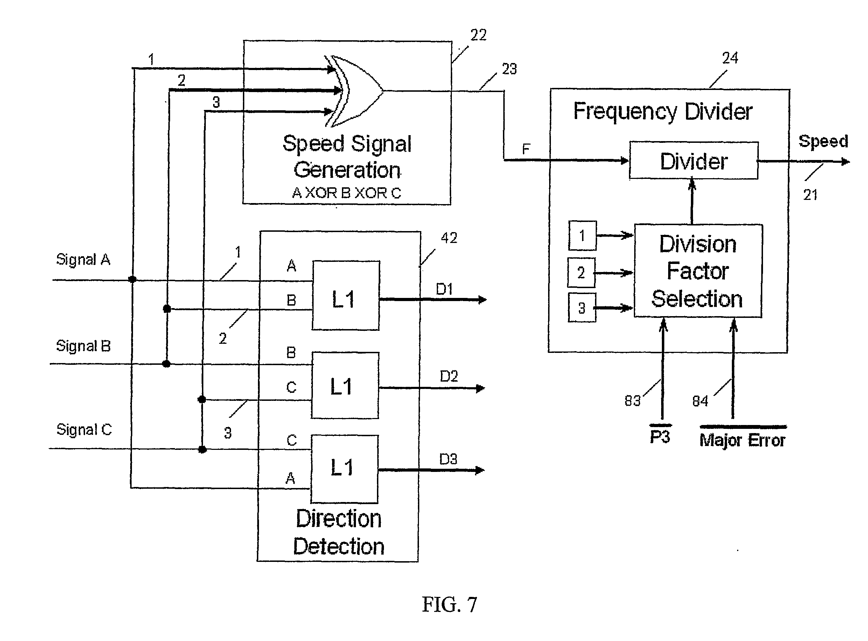

Referring to FIG. 7, is a diagram illustrating the speed signal generation section 22, where the output signal 23 is generated as an XOR combination of the input signals 1, 2 and 3. The output signal 23 is received by the frequency divider section 24, which divides the frequency with a frequency division factor 1 (one), 2 (two) or 3 (three) selected by signals 83 (P3) and signal 84 (Major Error) and then generates the output speed signal 21. The direction detection section 42, combines encoder input signals in pairs (i.e. 1 and 2, 2 and 3, 3 and 1) such in an encoder with two shifted pulses and using known direction detection logic denoted by L1 and generates three direction signals denoted by D1, D2, D3.

Encoder error monitoring and diagnosis is done in section 80, where the output signals 81 (P1) and 82 (P2) for direction signal selection are generated according to the state machine described in details below.

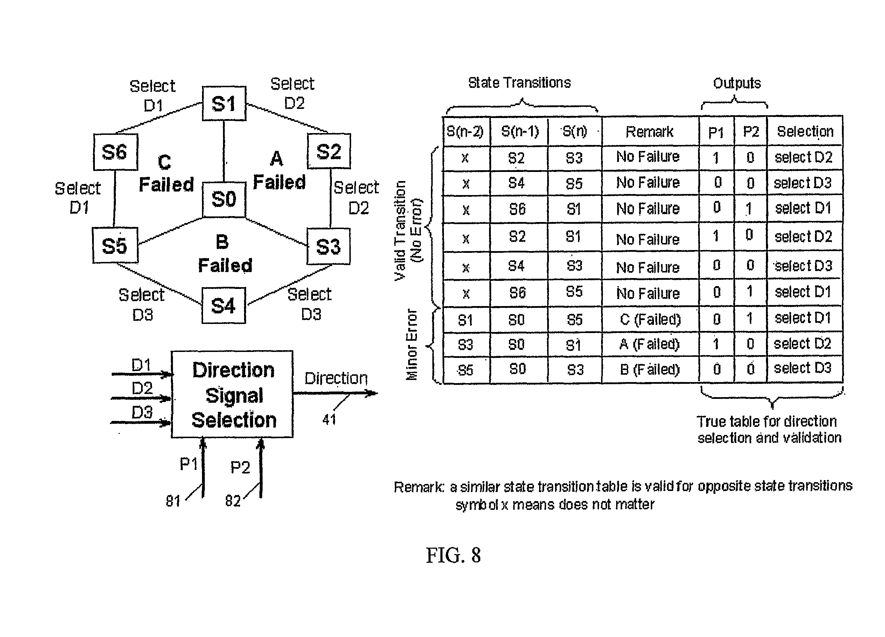

Referring to FIG. 8, is a diagram illustrating a state machine description of the encoder error monitoring and diagnosis section 80, used for direction signal selection according to the second embodiment of the present invention. Based on current and previous encoder state transitions, as shown in FIG. 8, is possible to detect which encoder signal failed. The state of the encoder signal (no failure or failure) is coded into the output signals 81 (P1) and 82 (P2) according to FIG 8, which are used to select the direction signal, and represents selection signals for the direction signal selection section 43. Valid transitions and invalid transitions associated with minor error (one encoder signal failed) are shown in the state transition table. Since at least two valid encoder signals are required for direction detection, in case of major error (two or more signals failed), direction detection is no longer possible.

The frequency division factor is specified by signals 83 (P3) and signal 84 (Major Error), which represents the output signals of section 80. In case of no error, the frequency division factor should be 3 (three), in case of minor error (one encoder signal failed) it should be 2 (two), and in case of major error (two or more encoder signals failed) it should be 1 (one). The error detection and diagnosis as well as generation of signal 83 (P3) and signal 84 (Major Error) is described in details below using a state machine description.

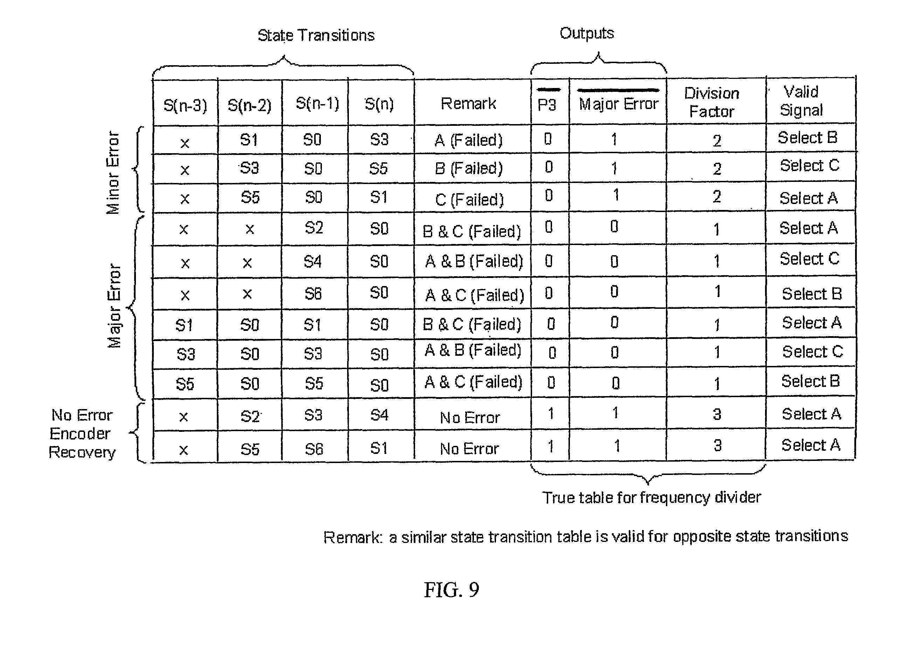

FIG. 9 is a diagram illustrating a state machine description of the encoder error monitoring and diagnosis section 80, used for frequency division factor selection according to the second embodiment of the present invention. Current and previous encoder state transitions (shown in the state transition table) are used to detect encoder signal failure. One encoder signal failure is monitored by the output signal 83 (P3), two encoder signal failure is monitored by signal 84 (Major Error). According to the speed signal generation section 22, if there is no encoder signal failure the frequency of the output signal 23 will be three times the frequency of the input signals (signals 1, 2 and 3 have same frequencies). If one encoder signal fails, the frequency of the output signal 23 will be two times the frequency of the input signals. If two encoder signals failed the frequency of the output signal 23 will be equal with the frequency of the input signal.

Therefore, the frequency division factor (shown in FIG. 9) selected by the signals 83 (P3) and 84 (Major Error) should be 3 in case of no error, should be 2 in case of minor error (one signal failed) and should be 1 in case of major error (two signals failed).

The output signals 21 (Speed), 41 (Direction), 33 (Minor Error) and 84 (Major Error) generated by the fault-tolerant speed and movement direction sensing device can be sent to a motion control unit.

The invention discloses a speed and movement direction sensing device with self-test for elevators and escalators. The sensing device includes an incremental encoder, which generates three pulses shifted with 120 (electrical) degrees.

A speed signal generation section receives the encoder signals and generates a pulse signal, which frequency is proportional with the frequency of the input signal.

The encoder self-test section monitors the encoder states and detects encoder error based on the encoder signals and a direction detection section generates a direction signal based on the encoder pulses.

The speed signal, the encoder self-test signal and the direction signal are sent to the elevator or escalator control unit. The sensing device allows encoder self-test even in case of zero speed. The encoder error (fault) can be detected before the elevator or escalator movement, which represent an advantage compared with the prior art.

According to the present invention, a fault-tolerant encoder provides for self-test, monitoring and diagnosis for speed and movement direction sensing.

In case of minor encoder error (one encoder signal failed) the sensing device provides correct speed and movement direction information. In case of major encoder error (two or more encoder signals failed) the sensing device reports major error and can provide correct speed information if two encoder signals failed.

The fault-tolerant speed and movement direction sensing device offers a higher reliability than the prior art and can be applied in motion control systems where high safety and integrity level is required.

As described above, according to the present invention, there is provided an encoder for outputting a pulse signal which repeats ON/OFF every 180 electrical degrees, as three kinds of pulse signals shifted with 120 electrical degrees. With this configuration, eight encoder states are generated based on the three shifted pulse signals. Further, the eight encoder states are categorized into six valid encoder states and two invalid encoder states (see FIGS. 3 and 4).

Accordingly, the encoder self-test section 30 (corresponding to the static error diagnosis section) monitors, based on the three shifted pulse signals, the occurrence of the two invalid encoder states (corresponding to the states of S0 and S7 in FIG. 4), to thereby statically detect an encoder error state (see FIGS. 4 and 5).

The direction detection section 40 selects, based on the three shifted pulse signals, two of the pulse signals, and generates a movement direction signal of the rotary body based on the state transitions of the selected pulse signals (see FIG. 3).

According to the present invention, based on the three shifted pulse signals, the current states of the three pulse signals and previous state transitions to reach the current states are subjected to monitoring, thereby identifying one of the three pulse signals as a pulse signal in which the state transition is not effected, in other word, in which it is recognized that there is a transition error(see FIGS. 8 and 9).

Accordingly, the error monitoring and diagnosis section 80 (corresponding to the dynamic error diagnosis section) monitors, based on data obtained from records of the current state and three previous states of the signals, the state transitions of the three pulse signals, to thereby dynamically detect a second encoder error state (see FIGS. 6, 8, and 9). Also, it is possible to identify, among the three pulse signals, a pulse signal having an error occurring therein. Further, it is possible to output a major encoder error signal in which two or more pulse signals fail and a minor encoder error in which only one pulse signal fails, in a manner that the major encoder error signal and the minor encoder error signal can be distinguished from each other (see FIG. 9).

The computing section 32 generates a minor encoder error as a logical AND combination between the error detection result obtained by the encoder self-test section 30 (corresponding to the static error diagnosis section) and the error detection result obtained by the error monitoring and diagnosis section 80 (corresponding to the dynamic error diagnosis section), and outputs the minor encoder error (see FIG. 6).

The speed signal generation section 22 and the frequency divider section 24 select, based on the detection result of the encoder error state which includes the major encoder error signal and the minor encoder error both output from the error monitoring and diagnosis section 80, one of the three pulse signals which is in normal operation, to thereby generate a pulse signal having a frequency proportional to the frequency of the selected pulse signal, as a speed signal (see FIGS. 6 and 9).

The speed signal generation section 22 obtains a combined signal as an exclusive OR combination of the three pulse signals (see FIG. 7). Then, the frequency divider section 24 generates, based on the detection result of an encoder error state obtained by the error monitoring and diagnosis section 80, a speed signal, by following the three procedures described below (see FIGS. 7 and 9).
(1) In a case when the encoder error state signal is not received, the speed signal is generated based on the combined signal by dividing the frequency of the combined signal by a factor of 3.
(2) In a case when the minor encoder error signal is received, the speed signal is generated based on the combined signal by dividing the frequency of the combined signal by a factor of 2.
(3) In a case when the major encoder error signal is received, the speed signal is generated based on the combined signal without dividing the frequency of the combined signal.

The direction detection section 42 generates, based on the three shifted pulse signals, three kinds of pairs of signals (see FIG. 7). Further, the direction signal selection section 43 selects, based on the detection result of the encoder error state which includes the minor encoder error signal output from the error monitoring and diagnosis section 80, one pair of the three kinds of pairs of signals, as the pair of signals which include two signals in normal operation, to thereby generate a movement direction signal (see FIGS. 6 and 8).

## Claims

1. A sensing device for detecting, based on a pulse signal output from an encoder (10) provided to a rotary body, a speed of the rotary body, a movement direction of the rotary body, and an abnormal state of the pulse signal, the sensing device comprising:
an encoder (10) comprising three sensors (11, 12, 13) provided to the rotary body, three sensors (11, 12, 13) outputting pulse signals which repeat ON and OFF every 180 electrical degrees, as three pulse signals (A, B, C) shifted by 120 electrical degrees;
a speed signal generation section (20, 22) for receiving the three pulse signals (A, B, C), generating a combined signal as an exclusive OR combination of the three pulse signals, as a speed signal of the rotary body;
a direction detection section (40, 42) for receiving the three pulse signals (A, B, C), selecting two of the received three pulse signals, and generating a movement direction signal of the rotary body based on state transitions of the selected two of the received three pulse signals; and
a dynamic error diagnosis section (80) for receiving the three pulse signals (A, B, C), and generating a second encoder error state signal by specifying, through monitoring of current three-bit states (Sn) of the received three pulse signals and state transitions between previous three-bit states (S(n-1),...) to reach the current states, one of the three pulse signals as a pulse signal in which it is recognized that there is a transition error,
further comprising a static error diagnosis section (30) for receiving the three pulse signals (A, B, C), monitoring the state of the received three pulse signals, determining, when having detected the case when the three pulse signals are all in an ON state and the case when the three pulse signals are all in an OFF state, that an error state is caused in which it is recognized that there is a transition error in one of the three pulse signals, and generating an encoder error state signal.

2. The sensing device according to claim 1, wherein the dynamic error diagnosis section (80) outputs, in a case of having detected the case when specific two pulse signals of the three pulse signals (A, B, C)have the transition errors and the case when all the three pulse signals have the transition errors, a major encoder error signal as the second encoder error state signal, and outputs, in a case of having detected the case when a specific one of the three pulse signals has the transition error, a minor encoder error signal as the second encoder error state signal.

3. The sensing device according to claim 2, wherein the speed signal generation section (20, 22) selects, in a case of having received the major encoder error signal or the minor encoder error signal from the dynamic error diagnosis section (80) as a judgment result, one of the three pulse signals (A, B, C)which is in normal operation, based on the major encoder error signal or the minor encoder error signal, and generates a pulse signal having a frequency proportional to the frequency of the selected one of the three pulse signals, as the speed signal.

4. The sensing device according to claim 2, wherein the speed signal generation section (20, 22) generates, based on a judgment result of the dynamic error diagnosis section (80), the speed signal based on the combined signal, the speed signal being generated by dividing the frequency of the combined signal by a factor of 3 in a case of not receiving the encoder error state signal, the speed signal being generated by dividing the frequency of the combined signal by a factor of 2 in a case of having received the minor encoder error signal, the speed signal being generated without dividing the frequency of the combined signal in a case of having received the major encoder error signal.

5. The sensing device according to claim 2, wherein the direction detection section (40, 42) selects, in a case of having received the minor encoder error signal from the dynamic error diagnosis section (80) as a judgment result, two pulse signals in normal operation of the three pulse signals (A, B, C), based on the minor encoder error signal, and generates the movement direction signal based on state transitions of the selected two pulse signals.

6. A control device for elevators and escalators, comprising:
the sensing device according to any one of claims 1 to 5; and
a control unit for receiving the speed signal, the movement direction signal, and the encoder error state signal from the sensing device, and controlling the elevators and the escalators based on the received signals.

## Patentansprüche

1. Erfassungsvorrichtung zum Erfassen, auf Grundlage eines Pulssignals, das von einem in einem Drehkörper bereitgestellten Encoder (10) ausgegeben wird, einer Geschwindigkeit des Drehkörpers, einer Bewegungsrichtung des Drehkörpers und eines Anomaliezustands des Pulssignals, wobei die Erfassungsvorrichtung umfasst:
einen Encoder (10) mit drei Sensoren (11, 12, 13), die für den Drehkörper bereitgestellt sind, wobei die drei Sensoren (11, 12, 13) Pulssignale ausgeben, die AN und AUS alle 180 elektrische Grade wiederholen, als drei Pulssignale (A, B, C), die um 120 elektrische Grade verschoben sind;
einen Geschwindigkeitssignal-Erzeugungsabschnitt (21, 22) zum Empfangen der drei Pulssignale (A, B, C), zum Erzeugen eines kombinierten Signals als eine exklusive OR-Kombination der drei Pulssignale, als ein Geschwindigkeitssignal des Drehkörpers;
einen Richtungserfassungsabschnitt (40, 42) zum Empfangen der drei Pulssignale (A, B, C), zum Auswählen von zwei der empfangenen drei Pulssignale, und zum Erzeugen eines Bewegungsrichtungssignals des Drehkörpers auf Grundlage von Zustandsübergängen der ausgewählten zwei der drei empfangenen Pulssignale; und
einen dynamischen Fehlerdiagnoseabschnitt (80) zum Empfangen der drei Pulssignale (A, B, C), und zum Erzeugen eines zweiten Encoderfehler-Zustandssignals durch Spezifizieren über eine Überwachung gegenwärtiger Drei-Bitzustände (Sn) der empfangenen drei Pulssignale und von Zustandsübergängen zwischen vorhergehenden Drei-Bitzuständen (S(n-1),...) zum Erreichen der gegenwärtigen Zustände, von einem der drei Pulssignale als ein Pulssignal, in dem erkannt wird, dass ein Übergangsfehler vorliegt,
ferner mit einem statischen Fehlerdiagnoseabschnitt (30) zum Empfangen der drei Pulssignale (A, B, C), zum Überwachen des Zustands der empfangenen drei Pulssignale, zum Bestimmen, wenn der Fall erfasst wurde, bei dem die drei Pulssignale alle in einem AN-Zustand sind, und dem Fall, wenn die drei Pulssignale alle in einem AUS-Zustand sind, dass ein Fehlerzustand verursacht wird, bei dem erkannt wird, dass es einen Übergangsfehler in einem der drei Pulssignale gibt, und zum Erzeugen eines Encoder-Fehlerzustandssignals.

2. Erfassungsvorrichtung nach Anspruch 1, wobei der dynamische Fehlerdiagnoseabschnitt (80) in einem Fall, wenn der Fall erfasst wird, bei dem spezifische zwei Pulssignale der drei Pulssignale (A, B, C) die Übergangsfehler aufweisen, und dem Fall, bei dem alle die drei Pulssignale die Übergangsfehler aufweisen, ein wesentliches Encoderfehlersignal als das zweite Encoderfehler-Zustandssignal ausgibt, und in einem Fall der Erfassung des Falls, bei dem ein spezifisches der drei Pulssignale den Übergangsfehler aufweist, ein geringfügiges Encoderfehlersignal als das zweite Encoderfehler-Zustandssignal ausgibt.

3. Erfassungsvorrichtung nach Anspruch 2, wobei der Geschwindigkeitssignal-Erzeugungsabschnitt (20, 22) in einem Fall des Empfangs des wesentlichen Encoderfehlersignals oder des geringfügigen Encoderfehlersignals von dem dynamischen Fehlerdiagnoseabschnitt (80) als ein Beurteilungsresultat eines der drei Pulssignale (A, B, C) auswählt, das in einem Normalbetrieb ist, auf Grundlage des wesentlichen Encoderfehlersignals oder des geringfügigen Encoderfehlersignals, und ein Pulssignal mit einer Frequenz proportional der Frequenz des ausgewählten der drei Pulssignale erzeugt, als das Geschwindigkeitssignal.

4. Erfassungsvorrichtung nach Anspruch 2, wobei der Geschwindigkeitssignal-Erzeugungsabschnitt (20, 22) auf Grundlage eines Beurteilungsresultats des dynamischen Fehlerdiagnoseabschnitts (80) das Geschwindigkeitssignal auf Grundlage des kombinierten Signals erzeugt, wobei das Geschwindigkeitssignal erzeugt wird durch Dividieren der Frequenz des kombinierten Signals durch einen Faktor 3, im Fall, dass das Encoderfehler-Zustandssignal nicht empfangen wird, wobei das Geschwindigkeitssignal durch Dividieren der Frequenz des kombinierten Signals durch einen Faktor 2 erzeugt wird, im Fall des Empfangs des geringfügigen Encoderfehlersignals, wobei das Geschwindigkeitssignal ohne Dividieren der Frequenz des kombinierten Signals erzeugt wird, in einem Fall des Empfangs des wesentlichen Encoderfehlersignals.

5. Erfassungsvorrichtung nach Anspruch 2, wobei der Richtungserfassungsabschnitt (40, 42) in einem Fall des Empfangs eines geringfügigen Encoderfehlersignals von dem dynamischen Fehlerdiagnoseabschnitt (80) als ein Beurteilungsresultat zwei Pulssignale in einem Normalbetrieb der drei Pulssignale (A, B, C) auswählt, auf Grundlage des geringfügigen Encoderfehlersignals, und das Bewegungsrichtungssignal auf Grundlage von Zustandsübergängen der ausgewählten zwei Pulssignale erzeugt.

6. Steuervorrichtung für Aufzüge und Rolltreppen, umfassend:
die Erfassungsvorrichtung nach einem der Ansprüche 1-5; und
eine Steuereinheit zum Empfangen des Geschwindigkeitssignals, des Bewegungsrichtungssignals und des Encoderfehler-Zustandssignals von der Erfassungsvorrichtung, und zum Steuern der Aufzüge und der Rolltreppen auf Grundlage der empfangenen Signale.

## Revendications

1. Dispositif capteur pour détecter, sur base d'un signal d'impulsion sorti en provenance d'un codeur (10) prévu sur un corps rotatif, une vitesse du corps rotatif, une direction de mouvement du corps rotatif, et un état anormal du signal d'impulsion, le dispositif capteur comprenant :
un codeur (10) comprenant trois capteurs (11, 12, 13) disposés sur le corps rotatif, trois capteurs (11, 12, 13) sortant des signaux d'impulsion qui répètent MARCHE et ARRÊT tous les 180 degrés électriques, en tant que trois signaux d'impulsion (A, B, C) décalés de 120 degrés électriques ;
une section de génération de signal de vitesse (20, 22) pour recevoir les trois signaux d'impulsion (A, B, C), générant un signal combiné en tant que combinaison OU exclusif des trois signaux d'impulsion, en tant qu'un signal de vitesse du corps rotatif ;
une section de détection de direction (40, 42) pour recevoir les trois signaux d'impulsion (A, B, C), sélectionnant deux des trois signaux d'impulsion reçus, et générant un signal de direction de mouvement du corps rotatif sur base de transitions d'état des deux sélectionnés des trois signaux d'impulsion reçus ; et
une section de diagnostic d'erreur dynamique (80) pour recevoir les trois signaux d'impulsion (A, B, C), et générer un second signal d'état d'erreur de codeur en spécifiant, par le contrôle d'états à trois bits courants (Sn) des trois signaux d'impulsion reçus et de transitions d'état entre des états à trois bits précédents (S (n-1),...) pour atteindre les états courants, un des trois signaux d'impulsion en tant qu'un signal d'impulsion dans lequel il est reconnu qu'il y a une erreur de transition,
comprenant en outre une section de diagnostic d'erreur statique (30) pour recevoir les trois signaux d'impulsion (A, B, C), contrôlant l'état des trois signaux d'impulsion reçus, déterminant, en ayant détecté le cas où les trois signaux d'impulsion sont tous dans un état MARCHE et le cas où les trois signaux d'impulsion sont tous dans un état ARRÊT, qu'un état d'erreur est provoqué dans lequel il est reconnu qu'il y a une erreur de transition dans un des trois signaux d'impulsion, et générant un signal d'état d'erreur de codeur.

2. Dispositif capteur selon la revendication 1, dans lequel la section de diagnostic d'erreur dynamique (80) sort, dans un cas de détection du cas où deux signaux d'impulsion spécifiques des trois signaux d'impulsion (A, B, C) ont les erreurs de transition et le cas où tous les trois signaux d'impulsion ont les erreurs de transition, un signal d'erreur de codeur principal en tant que le second signal d'état d'erreur de codeur, et sort, dans un cas de détection du cas où un signal spécifique des trois signaux d'impulsion a l'erreur de transition, un signal d'erreur de codeur secondaire en tant que le second signal d'état d'erreur de codeur.

3. Dispositif capteur selon la revendication 2, dans lequel la section de génération de signal de vitesse (20, 22) sélectionne, dans un cas de réception du signal d'erreur de codeur principal ou du signal d'erreur de codeur secondaire en provenance de la section de diagnostic d'erreur dynamique (80) en tant qu'un résultat de jugement, un des trois signaux d'impulsion (A, B, C) qui est en opération normale, sur la base du signal d'erreur de codeur principal ou du signal d'erreur de codeur secondaire, et génère un signal d'impulsion ayant une fréquence proportionnelle à la fréquence dudit sélectionné des trois signaux d'impulsion, en tant que le signal de vitesse.

4. Dispositif capteur selon la revendication 2, dans lequel la section de génération de signal de vitesse (20, 22) génère, sur base d'un résultat de jugement de la section de diagnostic d'erreur dynamique (80), le signal de vitesse sur base du signal combiné, le signal de vitesse étant généré en divisant la fréquence du signal combiné par un facteur de 3 dans un cas de non-réception du signal d'état d'erreur de codeur, le signal de vitesse étant généré en divisant la fréquence du signal combiné par un facteur de 2 dans un cas de réception du signal d'erreur de codeur secondaire, le signal de vitesse étant généré sans diviser la fréquence du signal combiné dans un cas de réception du signal d'erreur de codeur principal.

5. Dispositif capteur selon la revendication 2, dans lequel la section de détection de direction (40, 42) sélectionne, dans un cas de réception du signal d'erreur de codeur secondaire en provenance de la section de diagnostic d'erreur dynamique (80) en tant qu'un résultat de jugement, deux signaux d'impulsion en opération normale des trois signaux d'impulsion (A, B, C), sur base du signal d'erreur de codeur secondaire, et génère le signal de direction de mouvement sur base de transitions d'état des deux signaux d'impulsion sélectionnés.

6. Dispositif de commande pour ascenseurs et escaliers roulants, comprenant :
le dispositif capteur selon l'une quelconque des revendications 1 à 5 ; et
une unité de commande pour recevoir le signal de vitesse, le signal de direction de mouvement, et le signal d'état d'erreur de codeur en provenance du dispositif de détection, et commander les ascenseurs et les escaliers roulants sur base des signaux reçus.
